## Europäisches Patentamt

(19) **European Patent Office**

**Office européen des brevets**

(11) Veröffentlichungsnummer: **0 131 683**
**B1**

(12) # EUROPÄISCHE PATENTSCHRIFT

(45) Veröffentlichungstag der Patentschrift:
**31.05.89**

(51) Int. Cl.⁴: **B 60 T 15/18**

(21) Anmeldenummer: **84103032.3**

(22) Anmeldetag: **20.03.84**

(54) **Relaisventil.**

(30) Priorität: **15.06.83 DE 3321566**

(43) Veröffentlichungstag der Anmeldung:
**23.01.85 Patentblatt 85/4**

(45) Bekanntmachung des Hinweises auf die Patenterteilung:
**31.05.89 Patentblatt 89/22**

(84) Benannte Vertragsstaaten:
**AT CH DE FR GB IT LI NL SE**

(56) Entgegenhaltungen:
**DE-B-1 555 523**
**DE-B-1 963 879**
**DE-C-1 814 722**

**KATALOG DER FIRMA WABCO WESTINGHOUSE,**
**Katalogblatt 973 001, Ausgabe Februar 1977,**
**Relaisventil (2 Seiten)**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Reinecke, Erich, Kastanieneck 6, D-3167 Burgdorf (DE)**

(74) Vertreter: **Schrödter, Manfred, WABCO Westinghouse Fahrzeugbremsen GmbH Am Lindener Hafen 21 Postfach 91 12 80, D-3000 Hannòver 91 (DE)**

EP 0 131 683 B1

## Beschreibung

Die Erfindung betrifft ein Relaisventil gemäß dem Oberbegriff des Patentanspruchs 1.

Ein derartiges Relaisventil, bei dem das Ventil als Auslaßventil dient, das mit einem Einlaßventil ein Doppelsitzventil bildet, ist durch den Europa-Katalog der Firma WABCO Westinghouse Fahrzeugbremsen GmbH (Katalogblatt 973 001, Ausgabe Februar 1977) vorbekannt. Das Doppelsitzventil weist bei diesem bekannten Relaisventil ein Doppelventilglied auf, das mit einem gehäusefesten Ventilglied das Einlaßventil und mit dem dem Steuerkolben zugeordneten Ventilglied das Auslaßventil bildet.

Ein Relaisventil dieser Art wird z. B. in Druckluft-Bremsanlagen für Fahrzeuge zum schnellen Be- und Entlüften von Druckluftgeräten wie Bremszylindern verwendet.

Die Kennlinie eines solchen Relaisventils ist vom Verhältnis der vom Steuerdruck beaufschlagten Wirkfläche des Steuerkolbens zu derjenigen Wirkfläche (Reaktionsfläche) des Steuerkolbens bestimmt, die vom ausgesteuerten Druck beaufschlagt wird. Der maximale Ausgangsdruck wird dabei entweder vom maximalen Steuerdruck oder vom maximalen Wert des Eingangs-Arbeitsdruckes des Relaisventils bestimmt. Für den Fall, daß eine Begrenzung des ausgesteuerten Arbeitsdruckes unabhängig vom maximalen Druck des Steuerdruckes und unabhängig vom maximalen Eingangs-Arbeitsdruck gewünscht ist, ist z. B. die Verwendung eines zusätzlichen Druckbegrenzers in der Steuerleitung oder in der Arbeitsleitung (eingangsseitig oder ausgangsseitig) erforderlich.

Der Erfindung liegt die Aufgabe zugrunde, ein Relaisventil der eingangs genannten Art zu schaffen, bei dem der ausgesteuerte Arbeitsdruck auf einfache Weise ohne die Verwendung eines zusätzlichen Druckbegrenzers begrenzt werden kann.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Aus der DE-AS-1 963 879 ist zwar ein Relaisventil bekannt, bei dem der Steuerkolben auch über einen Ventilgliedkolben verfügt, der im Steuerkolben abgedichtet geführt ist. Bei diesem Relaisventil ist der Steuerkolben allerdings im Bereich des Ventilgliedkolbens auf der mit Steuerdruck beaufschlagbaren Seite offen, so daß der Ventilgliedkolben auch auf dieser Seite mit Steuerdruck beaufschlagbar ist. Das führt dazu, daß der Ventilgliedkolben wie ein herkömmlicher Steuerkolben arbeitet und durch ihn keine Begrenzung des Arbeitsdrucks erreichbar ist. Bei diesem Relaisventil dient der eigentliche Steuerkolben lediglich dazu, den Steuerquerschnitt bei Druckbeaufschlagung zu vergrößern, um die Ansprechzeit zu verkürzen. Nach dem Ansteuern stößt der eigentliche Steuerkolben sehr rasch gegen einen gehäusefesten Anschlag, so daß ab diesem Zeitpunkt die Steuerung nur noch vom Ventilgliedkolben übernommen wird.

Die Erfindung hat den Vorteil, daß die gewünschte Begrenzung des ausgesteuerten Arbeitsdruckes unabhängig von dem Verhältnis der Wirkflächen des Steuerkolbens vorgenommen werden kann. Bei einer vorgegebenen Konstruktion eines Relaisventils, das die erwähnte Druckbegrenzung nicht aufweist, muß praktisch nur eine Änderung des Steuerkolbens vorgenommen werden, um die erwünschte Druckbegrenzung erreichen zu können.

Die Erfindung eignet sich ferner in vorteilhafter Weise zur Ansteuerung eines Federspeicher-Bremszylinders in einer Druckluft-Bremsanlage für Fahrzeuge. In diesem Fall kann die Druckbegrenzung auf einen Wert eingestellt werden, der kleiner als der Vorratsdruck der Bremsanlage ist und der trotzdem zum Lösen des Federspeichers ausreicht. Auf diese Weise ist der Federspeicher-Bremszylinder vergleichsweise schnell und energiesparend betätigbar.

Die Erfindung ist ganz allgemein bei Relaisventilen anwendbar, bei denen der ausgesteuerte Druck begrenzt werden soll. Für den Fall, daß es sich um ein Relaisventil handelt, das nur ein Einlaßventil aufweist, kann eine Reduzierung des ausgesteuerten, auf einen bestimmten Wert begrenzten Ausgangs-Arbeitsdruckes über eine parallel zum Relaisventil angeordnete Entlüftungs-Ventileinrichtung vorgenommen werden. Eine solche Entlüftungsventileinrichtung wird dann tätig, wenn der Steuerdruck des Relaisventils verringert wird.

Eine solche zusätzliche Entlüftungs-Ventileinrichtung ist nicht erforderlich, wenn es sich um ein spezielles Relaisventil der bekannten und eingangs beschriebenen Art mit einem Doppelsitzventil (Einlaßventil und Auslaßventil) handelt.

Die Erfindung wird anhand zweier Ausführungsbeispiele und zweier Beispiele für eine vorteilhafte Anwendung der Erfindung näher beschrieben. Es zeigen:

Figur 1 ein Relaisventil mit einem begrenzten ausgangsseitigen Arbeitsdruck;

Figur 2 und 3 je ein Beispiel für eine vorteilhafte Anwendung eines Relaisventils der in Figur 1 dargestellten Art und

Figur 4 ein zweikreisig ansteuerbares Relaisventil mit einem begrenzten ausgangsseitigen Arbeitsdruck.

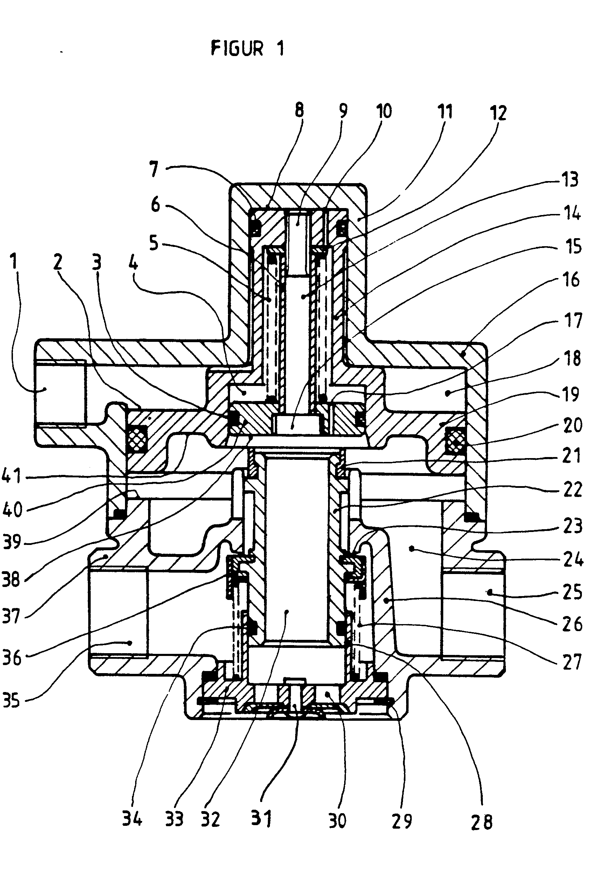

In Figur 1 ist ein pneumatisch gesteuertes Relaisventil für eine Druckluftanlage dargestellt, dem über einen Steueranschluß 1 der Steuerdruck zugeführt ist. In Abhängigkeit von diesem Steuerdruck ist der an einem Arbeitsdruck-Auslaß 25 meßbare Druck bis zu einem vorgegebenen maximalen Wert steuerbar.

Die dem Arbeitsdruck-Auslaß 25 entströmende Druckluft wird dem Relaisventil aus einem nicht dargestellten Vorratsbehälter über einen Arbeitsdruck-Einlaß 35 zugeführt.

Das Gehäuse des dargestellten Relaisventils besteht aus einem Gehäuseoberteil 16 und einem Gehäuseunterteil 37. Im Gehäuseoberteil 16 ist eine mit dem Steueranschluß 1 verbundene Steuerdruckkammer 18 angeordnet, die nach unten von einem Steuerkolben 19 begrenzt ist. Der im Gehäuseoberteil 16 verschiebbar angeordnete Steuerkolben 19 ist mittels einer Dichtung 20 gegenüber dem Gehäuseoberteil 16 abgedichtet.

Ein rohrförmiger Vorsprung 14 des Steuerkolbens 19 ist in einem entsprechenden rohrförmigen Ansatz 11 des Gehäuseoberteils 16 geführt und mittels einer Dichtung 7 gegen die Wandung des Ansatzes 11 abgedichtet. Somit weist die vom Steuerdruck in der Steuerdruckkammer 18 beaufschlagte Wirkfläche 2 des Steuerkolbens 19 die Form einer Ringfläche auf. Der Steuerkolben 19 weist eine abgestufte Bohrung 4 auf, deren erweiterter, äußerer Teil einen Ventilgliedkolben 40 aufnimmt. Der Ventilgliedkolben 40 ist in dem erweiterten Teil der abgestuften Bohrung 4 des Steuerkolbens 19 geführt und mittels einer Dichtung 3 gegen die Wandung der abgestuften Bohrung 4 abgedichtet. Der Ventilgliedkolben 40 seinerseits weist ebenfalls eine abgestufte zentrale Bohrung auf, die zur Aufnahme sowohl des Kopfes 15 als auch des Schaftes einer Schraube 13 dient.

Die Schraube 13 ist mittels eines Gewindeabschnittes 9 in eine entsprechende Gewindebohrung des Endes des rohrförmigen Vorsprunges 14 des Steuerkolbens 19 eingeschraubt. In dem inneren, verengten Teil der abgestuften Bohrung 4 des Steuerkolbens 19 ist eine Steuerfeder 5 angeordnet, die die Schraube 13 umgibt und sich einerseits über einen als Lochscheibe ausgebildeten Federteller 12 am Ende des rohrförmigen Vorsprungs 14 des Steuerkolbens 19 und andererseits an dem Ventilgliedkolben 40 abstützt. Eine Hülse 6 ist zwischen der Schraube 13 und der Steuerfeder 5 angeordnet.

Die zuletzt beschriebene Anordnung bewirkt, daß der Ventilgliedkolben 40 abgedichtet gegen die Kraft der Steuerfeder 5 in dem erweiterten Teil der abgestuften Bohrung 4 des Steuerkolbens 19 verschiebbar ist. Nach unten zu ist der Weg des Ventilgliedkolbens 40 von dem Kopf 15 der Schraube 13 begrenzt. Eine zwischen dem Ende des rohrförmigen Vorsprungs 14 des Steuerkolbens 19 und dem rohrförmigen Ansatz 11 des Gehäuseoberteils 16 liegende Kammer 8 ist über eine Bohrung 10 in dem Ende des rohrförmigen Vorsprungs 14 mit der abgestuften Bohrung 4 des Steuerkolbens 19 verbunden. Die von der erwähnten abgestuften Bohrung 4 und dem Ventilgliedkolben 40 gebildete Kammer ihrerseits ist über eine Bohrung 17 im Ventilgliedkolben 40 entlüftbar.

Eine unterhalb des Steuerkolbens 19 angeordnete und vom Steuerkolben 19 begrenzte Ausgangskammer 24 ist mit dem Arbeitsdruck-Auslaß 25 verbunden. Der in der Ausgangskammer 24 herrschende Druck beaufschlagt die unteren Ringflächen des Steuerkolbens 10 und des Ventilgliedkolbens 40, die somit als Reaktionsflächen dienen. Gegenüber dem Steuerkolben 19 ist eine vom Gehäuseunterteil 37 gebildete Gehäusewand 26 angeordnet. Diese Gehäusewand 26 weist eine Bohrung auf, in der ein als rohrförmiger Körper ausgebildetes Doppelventilglied 22 angeordnet ist. Das obere Ende 21 des Doppelventilgliedes 22 ist als ein elastischer Ventilsitz ausgebildet, der mit der als Dichtfläche 38 ausgebildeten Unterseite des Ventilgliedkolbens 40 ein Auslaßventil 21, 38 bildet. Über dieses Auslaßventil 21, 38 ist die Ausgangskammer 24 mit einer Bohrung 32 des rohrförmigen Doppelventilgliedes 22 verbunden.

Ein außerhalb der Ausgangskammer 24 angeordneter ringförmiger Vorsprung 36 des Doppelventilgliedes 22 ist als eine elastische Dichtfläche ausgebildet, die mit einem die Bohrung der Gehäusewand 26 umgebenden Ventilsitz 23 ein Einlaßventil 23, 36 bildet. Über dieses Einlaßventil 23, 36 ist die Ausgangskammer 24 mit dem Arbeitsdruck-Einlaß 35 verbindbar.

Zur Führung des Doppelventilgliedes 22 ist ein im Gehäuseunterteil 37 mittels eines Sicherungsringes 29 befestigtes Führungsteil 33 vorgesehen. Dieses Führungsteil 33 weist einen nach oben gerichteten hülsenförmigen Vorsprung 28 auf, in dem das Doppelventilglied 22 abgedichtet geführt ist. Die erwähnte Abdichtung erfolgt mittels eines das Doppelventilglied 22 umgebenden Dichtringes 34. Zwischen dem Führungsteil 33 und dem Doppelventilglied 22 ist eine Feder 27 angeordnet, die das Doppelventilglied 22 in Schließrichtung des Einlaßventils 23, 36 beaufschlagt.

Zur Entlüftung der Bohrung 32 des Doppelventilgliedes 22 sind mehrere Bohrungen 30 im Führungsteil 33 vorgesehen, die mittels einer elastischen Klappe 31 gegen Schmutz und Spritzwasser geschützt sind.

Das soweit beschriebene Relaisventil arbeitet wie folgt:

Bei einer Beaufschlagung des Steueranschlusses 1 und damit der Steuerdruckkammer 18 mit einem Steuerdruck wird der Steuerkolben 19 auf das Doppelventilglied 22 zu bewegt und das Auslaßventil 21, 38 geschlossen. Der Ventilgliedkolben 40 nimmt dabei bezüglich des Steuerkolbens 19 die dargestellte Position ein. Anschließend wird das Einlaßventil 23, 36 geöffnet. Die dem Arbeitsdruck-Einlaß 35 zugeführte Druckluft kann dann in die Ausgangskammer 24 strömen. Der sich dabei in der Ausgangskammer 24 aufbauende Druck des ausgesteuerten Arbeitsdruckes beaufschlagt die untere als Reaktionsfläche wirkende Wirkfläche 41, 38 des Steuerkolbens 19.

Mit der Erhöhung des Druckes in der Ausgangskammer 24 ergibt sich dann ein Gleichgewicht zwischen der vom Steuerdruck auf die obere Wirkfläche 2 des Steuerkolbens 19 ausgeübten Kraft und der vom ausgesteuerten Druck auf die Reaktionsfläche 41 ausgeübten Kraft. Kurz nach oder vor Erreichen dieses Gleichgewichtes - je nach Einfluß von Reibungskräften und der Kraft der Feder 27 - wird dann eine Abschlußstellung des Steuerkolbens 19 erreicht, in der das Einlaßventil 23, 30 und das Auslaßventil 21, 38 geschlossen sind.

Bei einer Verringerung des Steuerdruckes wird der Steuerkolben 19 zunächst unter der Beaufschlagungskraft der Reaktionsfläche 41 nach oben bewegt, so daß das Auslaßventil 21, 38 geöffnet wird und der Druck in der Ausgangskammer 24 verringert wird. Diese Verringerung des Druckes in der Ausgangskammer 24 geht soweit, bis sich wieder das obenerwähnte Gleichgewicht der auf den Steuerkolben 19 wirkenden Kräfte einstellt. Gegebenenfalls wird bei vollständiger Entlüftung der Steuerdruckkammer 18 die Ausgangskammer 24 ebenfalls vollständig entlüftet. Die soweit beschriebene Wirkung des Relaisventils entspricht der Wirkungsweise üblicher Relaisventile.

Bei einer weiteren Erhöhung des Steuerdruckes in der Steuerdruckkammer 18 wird zunächst der Steuerkolben 19 nach unten bewegt und somit das Einlaßventil 23, 36 geöffnet. Wenn dann der ausgesteuerte Druck in der Ausgangskammer 24 so groß wird, daß diejenige Kraft, mit der der ausgesteuerte Druck die von dem Ventilsitz 21 und dem äußeren Durchmesser des Ventilgliedkolbens 40 begrenzte Ringfläche des Ventilgliedkolbens 40 beaufschlagt, die von der vorgespannten Steuerfeder 5 aufgebrachte Kraft überwindet, dann wird der Ventilgliedkolben 40 relativ zum Steuerkolben 19 nach oben bewegt. Dies hat dann zur Folge, daß das Einlaßventil 23, 36 geschlossen wird und daß sich der Steuerkolben 19 mit dem relativ zum Steuerkolben 19 verschobenen Ventilgliedkolben 40 in einer Abschlußstellung befindet. Bei einer weiteren Erhöhung des Druckes in der Steuerdruckkammer 18 wird der Steuerkolben 19 schließlich an einem Absatz 39 des Gehäuseunterteils 37 zur Anlage kommen. Von diesem Wert des Steuerdruckes in der Steuerdruckkammer 18 ab wird bei steigendem Steuerdruck der Ventilgliedkolben 40 vom ausgesteuerten Druck in der Ausgangskammer 24 soweit nach oben bewegt, daß nicht nur das Einlaßventil 23, 36 geschlossen wird, sondern auch das Auslaßventil 21, 38 geöffnet wird, bis der Druck in der Ausgangskammer 24 auf denjenigen Wert reduziert ist, der den Ventilgliedkolben 40 in einer Abschlußstellung (Einlaßventil 23, 36 und Auslaßventil 21, 38 geschlossen) hält.

Der Ventilgliedkolben 40 ist so angeordnet und so ausgebildet, daß er über eine Weglänge gegenüber dem Steuerkolben 19 bewegbar ist, die länger ist als die Weglänge, die der Steuerkolben 19 nach dem Öffnen des Einlaßventils 23, 36 bei normaler Relaisfunktion bis zur Anlage an dem Absatz (Anschlag) 39 zurücklegt. Man erkennt, daß die Vorspannkraft der Steuerfeder 5 denjenigen Druckwert bestimmt, von dem ab der Druck in der Ausgangskammer 24 nicht weiter ansteigen kann. Damit ist der Arbeitsdruck am Arbeitsdruckauslaß 25 auf den erwähnten Wert begrenzt.

Bei einer Verringerung des wie vorstehend beschrieben eingesteuerten Steuerdruckes bewegt sich zunächst der Steuerkolben 19 nach oben, bis derjenige Steuerdruck erreicht ist, bei dem das Auslaßventil 21, 38 durch das Abheben der Dichtfläche 38 vom Ventilsitz 21 geöffnet wird.

Durch die oben erwähnten Borungen 10 und 17 wird verhindert, daß derjenige Druckwert, auf den der Druck in der Ausgangskammer begrenzt ist, bzw. die Kennlinie des Relaisventils von weiteren Einflußgrößen als der Steuerfeder bestimmt wird. Von Bedeutung ist dabei, daß die Bohrung 17 innerhalb der von dem Ventilsitz 21 umschlossenen Fläche liegt.

Statt der beschriebenen Schraube 13 kann auch ein entsprechend geformter Stift zum Abfangen des Ventilgliedkolbens 40 verwendet werden. Weiterhin ist es möglich, die Abstützung der Steuerfeder 5 am Ventilgliedkolben 40 und/oder am Ende des rohrförmigen Vorsprunges 14 des Steuerkolbens 19 so auszubilden, daß die Vorspannung der Steuerfeder veränderbar ist. Auf diese Weise kann der Wert des maximal erreichbaren Druckes in der Ausgangskammer 24 verschiedenen Verhältnissen bzw. Einsatzbedingungen des Relaisventils angepaßt werden.

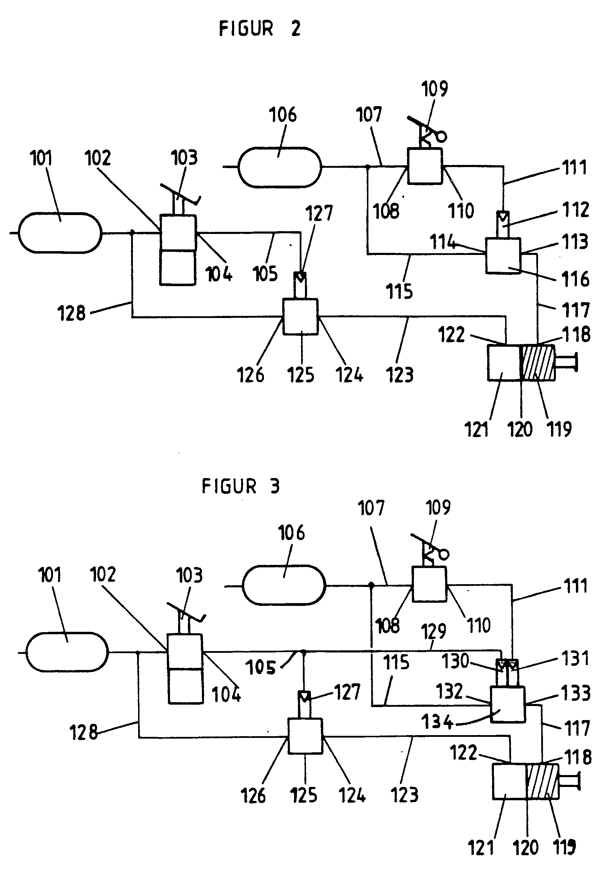

In Fig. 2 ist ein Teil einer Druckluft-Bremsanlage für Nutzfahrzeuge dargestellt, um eine vorteilhafte Anwendung eines Relaisventils der in Fig. 1 dargestellten Art erläutern zu können. Es sind nur diejenigen Teile der Druckluft-Bremsanlage dargestellt, die unbedingt für das Verständnis der erwähnten Anwendung eines Relaisventils der in Fig. 1 dargestellten Art nötig sind.

Zur Betätigung eines aus einem Betriebsbremszylinder 121 (z .B. Membranzylinder) und einem Federspeicherzylinder 119 bestehenden kombinierten Federspeicherbremszylinders 120 sind ein vom Fuß des Fahrers im Falle einer Betriebsbremsung betätigtes Motorwagenbremsventil 103 und ein manuell für die Hilfsbremsung oder die Feststellbremse betätigbares Handbremsventil 109 vorgesehen. Das Motorwagenbremsventil 103 und das Handbremsventil dienen als Druckluft-Steuerventile für die nachgeschalteten Bremsgeräte.

Aus einem Vorratsbehälter 101 gelangt Vorratsluft zu einem Einlaß 102 des zweikreisig ausgebildeten Motorwagenbremsventils 103. Von den beiden Bremskreisen des Motorwagenbremsventils 103 ist nur ein Bremskreis näher dargestellt und erläutert. Der an einem Anschluß 104 des Motorwagenbremsventils 103 ausgesteuerte Bremsdruck wird über eine Leitung 105 einem pneumatischen Steueranschluß 127 eines üblichen Relaisventils 125 zugeführt. Ein Arbeitsdruck-Einlaß 126 des Relaisventils 125 ist über eine Leitung 128 mit dem Vorratsbehälter 101 verbunden. Einem Arbeitsdruck-Auslaß 124 des Relaisventils 125 entströmt - abhängig vom Druck am Steueranschluß 127 - der ausgesteuerte Arbeitsdruck. Der Auslaß 124 des Relaisventils 125 ist über eine Leitung 123 mit einem Einlaß 122 des Betriebsbremszylinders 121 verbunden.

Die beschriebene Anordnung dient dazu, den Betriebsbremszylinder 121 in Abhängigkeit der Stellung des Pedals des Motorwagenbremsventils 103 über das Relaisventil 125 zu belüften. Der maximale Arbeitsdruck am Auslaß 124 des Relaisventils 125 ist dabei gleich dem Druck im Vorratsbehälter 101, also z. B. 8 bar.

Für den vom Handbremsventil 109 gesteuerten Bremskreis ist ein Vorratsbehälter 106 vorgesehen, der z. B. einen Druck von 8 bar speichert. Der Vorratsbehälter 106 ist über eine Leitung 107 mit einem Einlaß 108 des Handbremsventils 109 und über eine Leitung 115 mit einem Einlaß 114 eines zweiten Relaisventils 116 verbunden. Das Handbremsventil 109 ist so aufgebaut, daß es im unbetätigten Zustand an einem Auslaß 110 den vollen Arbeitsdruck (z. B. 8 bar) abgibt und mit zunehmender Betätigung des Betätigungshebels diesen Druck am Auslaß 110 reduziert. Das Handbremsventil 109 arbeitet also entlüftend.

Der Auslaß 110 des Handbremsventils 109 ist über eine Leitung 111 mit einem pneumatischen Steueranschluß 112 des Relaisventils 116 verbunden. Der Arbeitsdruck-Auslaß 113 des Relaisventils 116 ist über eine Leitung 117 mit einem Einlaß 118 der Lösekammer des Federspeicherzylinders 119 verbunden. Das Relaisventil 116 stellt kein übliches Relaisventil dar, sondern ein Relaisventil der in Figur 1 dargestellten Art. Der pneumatische Steueranschluß 112 des Relaisventils 116 entspricht dem Steueranschluß 1 des Gerätes nach Figur 1 und die Anschlüsse 114 und 113 des Relaisventils 116 entsprechen den Anschlüssen 35 und 25 des Gerätes nach Figur 1. In Figur 1 sind deshalb die zugeordneten Anschlüsse des Relaisventils 116 nach Figur 2 in Klammern mit angegeben.

Da es sich bei dem Relaisventil 116 in Figur 2 um ein anhand der Figur 1 beschriebenes Gerät handelt, ist der Arbeitsdruck am Ausgang 113 des Relaisventils 116, der als Lösedruck für den Federspeicherzylinder 119 dient, auf einen maximalen Wert begrenzt, der kleiner ist als der erwähnte Wert von 8 bar für den Arbeitsdruck des Vorratsbehälters 106. Der erwähnte maximale Wert für den Arbeitsdruck am Auslaß 113 des Relaisventils 116 ist so gewählt, daß er dem erforderlichen Lösedruck des Federspeicherzylinders 119 entspricht. Im dargestellten Beispiel ist dies ein Wert von 6 bar, da der Federspeicherzylinder 119 bei diesem Wert sicher gelöst ist.

Bei einer Betätigung des Handbremsventils 109 wird zunächst der Steuerdruck am Steueranschluß 112 des Relaisventils 116 von 8 bar auf 6 bar gesenkt, ohne daß der Arbeitsdruck am Anschluß 113 des Relaisventils 116 gesenkt wird. Erst beim Unterschreiten des Wertes von 6 bar am Steueranschluß 112 wird der Druck am Auslaß 113 verringert. Dies bedeutet zum einen, daß die Druckänderung am Anschluß 113 einer Verringerung des Steuerdruckes am Steueranschluß 112 sehr schnell folgen kann, ohne daß zuvor ein der Druckdifferenz zwischen 8 bar und 6 bar entsprechendes Luftvolumen aus dem Federspeicherzylinder 119 durch das Relaisventil 116 strömen muß. Zum anderen ist es bei Verwendung eines üblichen Handbremsventils zum erneuten Lösen des Federspeicherzylinders 119 erforderlich, nur den Steuerdruck in den Leitungen zwischen Handbremsventil und Steueranschluß 112 des Relaisventils 116 und im Handbremsventil selbst auf 8 bar aufzubauen. Der Lösedruck im Federspeicherzylinder 119 wird nur auf 6 bar aufgebaut. Dies bedeutet eine erhebliche Einsparung an Luftvolumen und damit an Energie.

Ein weiteres Beispiel für die Anwendung eines Relaisventils der in Figur 1 dargestellten Art ist in Figur 3 gezeigt. Es handelt sich dabei wie bei der Anlage nach Figur 2 um einen Teil einer Druckluft-Bremsanlage für Nutzfahrzeuge. Soweit die Komponenten und Anschlüsse die gleichen Bezugszeichen zeigen wie in Figur 2, handelt es sich um Komponenten und Anschlüsse der gleichen Art mit den gleichen Funktionen in den Figur 2 und 3. In Abwandlung zu der Druckluft-Bremsanlage nach Figur 2 zeigt die Anlage nach Figur 3 statt eines einkreisig ansteuerbaren Relaisventils für die Be- und Entlüftung des Federspeicherzylinders 119 ein zweikreisig ansteuerbares Relaisventil 134.

Das Relaisventil 134 besitzt zwei pneumatische Steueranschlüsse, von denen der eine Steueranschluß 130 über eine Leitung 129 an den Anschluß 104 des Motorwagenbremsventils 103 und der andere Steueranschluß 131 über die Leitung 111 an den Anschluß 110 des Handbremsventils 109 angeschlossen ist. Der Arbeitsdruck-Einlaß 132 des Relaisventils 134 ist über die Leitung 115 an den Vorratsbehälter 106 angeschlossen. Der Arbeits-Auslaß 133 des Relaisventils 134 ist über die Leitung 117 mit dem Einlaß 118 des Federspeicherzylinders 119 verbunden.

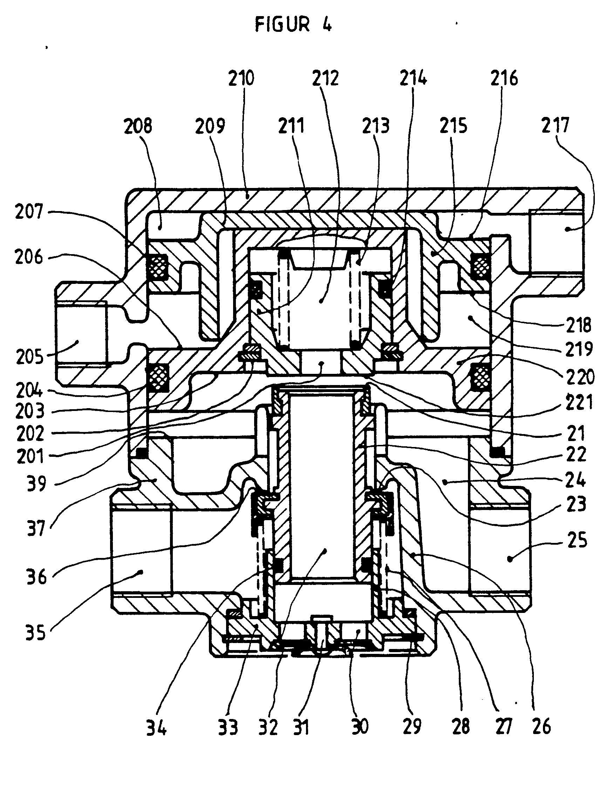

Das Relaisventil 134 wirkt in der beschriebenen Anordnung als ein Überlastungsschutz-Relaisventil, wie es in der deutschen Patentschrift 1 814 722 in seiner Funktionsweise näher beschrieben ist. Es soll mit dieser Anordnung verhindert werden, daß bei gleichzeitiger Betätigung des Motorwagenbremsventils 103 und des Handbremsventils 109 eine überhöhte und somit die mechanischen Teile des Bremssystems gefährdende Bremskraft erzeugt wird. Dies wird im Ergebnis mit dem Relaisventil 134 dadurch erreicht, daß das gleichzeitige Auftreten einer vollen Belüftung des Betriebsbremszylinders 121 und einer vollen Entlüftung des Federspeicherzylinders 119 verhindert wird. Im übrigen arbeitet·das Relaisventil 134 so, wie das anhand der Figur 1 beschriebene Gerät. Dies bedeutet, daß der Arbeitsdruck am Auslaß 133 des Relaisventils 134 auf einen maximalen Wert von z. B. 6 bar begrenzt ist, auch wenn die Steuerdrücke an den Steueranschlüssen 130 und 131 einen Wert von z. B. 8 bar aufweisen. Damit weist das Relaisventil 134 ebenfalls die oben anhand des Relaisventils 116 nach Figur 2 beschriebenen Vorteile auf. Darüber hinaus gilt auch für das Relaisventil 134 der Vorteil, daß für die Ansteuerung des Relaisventils handelsübliche Motorwagenbremsventile und Handbremsventile mit Arbeitsdrücken bzw. Steuerdrücken von 8 bar verwendet werden können. Ein Ausführungsbeispiel für eine konstuktive Ausbildung des Relaisventils 134 ist in Figur 4 dargestellt.

Bei den Bremsanlagen nach Figur 2 und Figur 3 wurde jeweils ein Relaisventil 125 verwendet, das in üblicher Weise aufgebaut ist. Es ist jedoch möglich, auch das Relaisventil 125 so auszubilden, wie das anhand der Figur 1 erläuterte Gerät. Dies ist insbesondere dann vorteilhaft, wenn der im Vorratsbehälter 101 gespeicherte Druck einen Wert aufweist, der höher ist als der maximal zulässige Druck im Betriebsbremszylinder 121. So kann z. B. der Druck im Vorratsbehälter 101 bzw. in der gesamten Bremsanlage auf der Steuerseite etwa 10 bar betragen, während in den Betriebsbremszylindern 121 nur ein Druck von z. B. 8 bar eingesteuert werden kann.

Die Figur 4 zeigt ein zweikreisig ansteuerbares Relaisventil, dessen Gehäuseunterteil 37 mit dem Gehäuseunterteil 37 des Relaisventils nach Figur 1 übereinstimmt. Gleiche Bezugszeichen in den Figuren 1 und 4 bedeuten gleiche Bauelemente mit gleichen Funktionen. Darüberhinaus besitzt der im Gehäuseoberteil 210 des Gerätes nach Figur 4 angeordnete Steuerkolben 220 die gleiche Funktion wie der Steuerkolben 19 in Figur 1.

Der Steuerkolben 220 ist mittels einer Dichtung 204 abgedichtet geführt. Auf seiner Oberseite, d.h. auf der Wirkfläche 206 wird der Steuerkolben 220 von dem in einer Steuerdruckkammer 219 herrschenden Steuerdruck beaufschlagt. Das Steuerdruck-Druckmittel wird der Steuerdruckkammer 219 über einen ersten Steueranschluß 205 zugeführt. Der Steuerkolben 220 weist einen nach unten offenen und nach oben druckdicht abgeschlossenen rohrförmigen Vorsprung auf, in dem ein Ventilgliedkolben 211 angeordnet ist.

Dieser Ventilgliedkolben 211 entspricht in seiner Funktion dem Ventilgliedkolben 40 in Figur 1. Der Ventilgliedkolben 211 ist mittels einer Dichtung 214 abgedichtet und mittels eines Sicherungsringes 202 im Steuerkolben 220 festgehalten. Eine in dem erwähnten rohrförmigen Vorsprung des Steuerkolbens 220 angeordnete und auf Druck beanspruchte Steuerfeder 213 beaufschlagt den Ventilgliedkolben 211 gegen die Abstützung durch den Sicherungsring 202. Die Steuerfeder 213 hat die gleiche Funktion wie die Steuerfeder 5 in Figur 1. Zur Entlüftung der die Steuerfeder 213 aufnehmenden Kammer 212 ist im Ventilgliedkolben 211 eine Bohrung 201 vorgesehen.

Der Ventilgliedkolben 211 bildet mit einer auf seiner Unterseite befindlichen Wirkfläche 221 und dem Ventilsitz 21 am Doppelventilglied 22 ein Auslaßventil 21, 221, das in seiner Funktion dem Auslaßventil 21, 38 des in Figur 1 dargestellten Relasventils entspricht. Die unteren Ringflächen des Steuerkolbens 220 und des Ventilgliedkolbens 211 bilden die Reaktionsfläche 203, 221 des beschriebenen Systems.

Oberhalb des als Relaiskolben arbeitenden Steuerkolben 220 ist in dem Gehäuseoberteil 210 ein weiterer Relaiskolben 209 vorgesehen, der mit seiner oberen Wirkfläche 216 eine weitere Steuerkammer 208 begrenzt. Der weitere Relaiskolben 209 ist mittels einer Dichtung 207 abgedichtet. Er ist so angeordnet, daß er bei einer Abwärtsbewegung mit einem rohrförmigen Ansatz 215 an dem Steuerkolben 220 zur Anlage kommen kann. Auf diese Weise sind die beiden Kolben 209 und 220 sinngemäß hintereinander geschaltet.

Die obenerwähnte Überlastungsschutz-Funktion des beschriebenen Relaisventils in Figur 4 wird dadurch möglich, daß der Steueranschluß 205 (Anschluß 131 in Figur 3) mit dem Handbremsventil und der weitere Steueranschluß 217 (Anschluß 130 in Figur 3) mit dem Motorwagenbremsventil verbunden ist. Bezüglich der Beaufschlagung des Steuerkolbens 220 mit dem vom Handbremsventil ausgesteuerten Steuerdruck ergeben sich die gleichen Betriebsweisen wie beim Relaisventil nach Figur 1.

Wenn gleichzeitig mittels des Handbremsventils eine Betätigung (Verringerung des Druckes in der Lösekammer) des Federspeicherzylinders, der an den Anschluß 25 angeschlossen ist, und mittels des Motorwagenbremsventils eine Betätigung der Betriebsbremse vorgenommen werden, wird der weitere Relaiskolben 209 über den Steueranschluß 217 mit einem Steuerdruck beaufschlagt. Wenn dann der Druck in der weiteren Steuerdruckkammer 208 den Druck in der Steuerdruckkammer 219, der die untere Wirkfläche 218 des weiteren Relaiskolbens 209 beaufschlagt, überwiegt, wird der weitere Relaiskolben 209 nach unten bewegt, bis er zur Anlage an dem Steuerkolben 220 kommt Auf diese Weise wird dann auch der Steuerkolben 220 trotz der vorausgesetzten Verringerung des Druckes in der Steuerkammer 219 nach unten bewegt, was eine erneute Erhöhung des Arbeitsdruckes in der Ausgangskammer 24 und damit in der Lösekammer des Federspeicherzylinders zur Folge hat. Die gleiche Überlastungsschutz-Funktion liegt auch dann vor, wenn das Handbremsventil an den Steueranschluß 217 und das Motorwagenbremsventil an den Steueranschluß 205 angeschlossen werden.

Die vorstehend beschriebenen Ausführungsbeispiele der Erfindung beziehen sich auf Relaisventile, die Doppelsitzventile mit einem Einlaßventil und einem Auslaßventil aufweisen. Der Erfindung kann jedoch auch bei einem Relaisventil angewendet werden, das lediglich ein Einlaßventil aufweist. Auch bei einem solchen Relaisventil ist dann der Ausgangs-Arbeitsdruck auf einen vorbestimmten Wert beschränkt. Eine mit einem solchen Relaisventil nicht ohne weiteres mögliche Reduzierung des ausgesteuerten Arbeitsdruckes kann gegebenenfalls mittels einer zusätzlichen, parallel zum Relaisventil angeordneten Entlüftungs-Ventileinrichtung erfolgen. Dabei wird die Entlüftungs-Ventileinrichtung tätig, wenn der Steuerdruck des Relaisventils sinkt. Ein solches Relaisventil, das nur ein Einlaßventil aufweist, kann auch zur Ansteuerung eines Federspeicher-Bremszylinders oder eines Betriebs-Bremszylinders verwendet werden, wenn für eine zusätzliche Entlüftung der Bremszylinder bei einer Reduzierung des Steuerdruckes des Relaisventils gesorgt wird.

Es ist auch möglich, daß der Ventilgliedkolben - im Gegensatz zu den beschriebenen Ausführungsbeispielen - nicht direkt als Ventilglied dient, sondern zur Betätigung eines mit ihm verbindenden Ventilgliedes dient. Eine solche Konstruktion ist insbesondere für ein solches Relaisventil von Interesse, das nur ein Einlaßventil aufweist.

**Patentansprüche**

1. Relaisventil mit folgenden Merkmalen:
a) es ist ein Steuerkolben (19, 220) zur Betätigung eines Ventils vorgesehen;
b) das Ventil umfaßt ein gehäusefestes Ventilglied (23) und ein dem Steuerkolben zugeordnetes Ventilglied (40, 211) und enthält ein Einlaßventil (23, 36);
c) das dem Steuerkolben zugeordnete Ventilglied ist auf der nicht vom Steuerdruck beaufschlagbaren Seite des Steuerkolbens angeordnet;
gekennzeichnet durch folgende Merkmale:
d) das dem Steuerkolben (19, 220) zugeordnete Ventilglied besteht aus einem Ventilgliedkolben (40, 211) oder ist von einem Ventilgliedkolben betätigbar;

e) der Ventilgliedkolben (40, 211) ist innerhalb einer drucklosen Kammer (4, 212), abgedichtet im Steuerkolben (19, 220) geführt und gegen die Kraft einer Steuerfeder (5, 213) in Schließrichtung des Einlaßventils (23, 36) bewegbar;
f) der Ventilgliedkolben (40, 211) weist eine Wirkfläche auf, die von dem auf die Reaktionsfläche (41, 203) des Steuerkolbens (19, 220) wirkenden Druck beaufschlagbar ist;
g) es ist ein gehäusefester Anschlag (39) für den Steuerkolben (19, 220) vorgesehen, an dem der Steuerkolben (19, 220) nach einer Bewegung in Öffnungsrichtung des Einlaßventils (23, 36) zur Anlage kommen kann;
h) der Ventilgliedkolben (40, 221) ist so angeordnet, daß er gegen die Kraft der Steuerfeder (5, 213) über eine Weglänge bewegbar ist, die länger ist als die Weglänge, die der Steuerkolben (19, 220) nach dem Öffnen des Einlaßventils (23, 36) bis zur Anlage an dem gehäusefesten Anschlag (39) zurücklegt, wenn sich der Ventilgliedkolben (40, 211) in seiner Ausgangslage befindet.

2. Relaisventil nach Anspruch 1,
gekennzeichnet durch folgende Merkmale:
a) das Ventil enthält auch ein Auslaßventil (21, 38, 221), das mit dem Einlaßventil (23, 36) ein Doppelsitzventil bildet;
b) das Doppelsitzventil weist ein Doppelventilglied (22) auf, das mit dem gehäusefesten Ventilglied (23) das Einlaßventil und mit dem Ventilgliedkolben (40) das Auslaßventil bildet.

3. Relaisventil nach wenigstens einem der vorhergehenden Ansprüche,
dadurch gekennzeichnet,
daß die die Steuerfeder (5, 213) aufnehmende Kammer (4, 212) mit der Atmosphäre verbunden ist.

4. Relaisventil nach Anspruch 3,
dadurch gekennzeichnet,
daß die Verbindung der die Steuerfeder (5, 213) aufnehmenden Kammer (4, 212) mit der Atmosphäre eine vom Auslaßventilsitz bzw. vom Auslaßventilkörper des Doppelventilgliedes (22) abdeckbare Öffnung (17, 201) im Ventilgliedkolben (40, 211) sowie eine Luftleitung (32) im Doppelventilglied (22) aufweist.

5. Relaisventil nach wenigstens einem der vorhergehenden Ansprüche,
gekennzeichnet durch folgende Merkmale:
a) der Ventilgliedkolben (40) umgibt einen im Steuerkolben (19) befestigten Stift (13);
b) der Stift (13) weist einen Anschlag (15) auf, an dem der Ventilgliedkolben (40) unter der Kraft der Steuerfeder (5) zur Anlage bringbar ist.

6. Relaisventil nach wenigstens einem der vorhergehenden Ansprüche,
dadurch gekennzeichnet,
daß zur Abstützung der Steuerfeder (5, 213) am Ventilgliedkolben (40, 211) und/oder zur Abstützung der Steuerfeder (5, 213) am Steuerkolben (19, 220) ein Federteller vorgesehen ist, dessen Abstand zum Ventilgliedkolben (40, 211) bzw. zum Steuerkolben (19, 220) veränderbar ist.

7. Relaisventil nach wenigstens einem der vorhergehenden Ansprüche,
gekennzeichnet durch die folgenden Merkmale:

a) der Steueranschluß (1, 112) des Relaisventils (116) ist mit einem Druckluft-Steuerventil (109) einer Druckluft-Bremsanlage für Fahrzeuge verbunden;

b) der Arbeitsdruck-Ausgang (113) des Relaisventils (116) ist mit der Druckkammer eines Bremszylinders (119) verbunden.

8. Relaisventil nach Anspruch 7,
dadurch gekennzeichnet,
daß der Arbeitsdruck-Eingang (114) des Relaisventils (116) mit einer Vorratsdruckquelle (106) der Druckluft-Bremsanlage verbunden ist.

9. Relaisventil nach Anspruch 7 oder 8,
gekennzeichnet durch die folgenden Merkmale:

a) als Druckluft-Steuerventil dient ein Handbremsventil (109);

b) der Arbeitsdruck-Ausgang (113) ist mit der Lösedruckkammer (119) eines Federspeicher-Bremszylinder verbunden.

10. Relaisventil nach Anspruch 7 oder 8,
gekennzeichnet durch die folgenden Merkmale:

a) als Druckluft-Steuerventil dient ein Betriebs-Bremsventil, insbesondere ein Motorwagen-Bremsventil (103);

b) der Arbeitsdruck-Ausgang (124) ist mit der Druckkammer eines Betriebs-Bremszylinder (121) verbunden.

11. Relaisventil nach wenigstens einem der Ansprüche 7 bis 9,
dadurch gekennzeichnet,
daß der Steuerkolben von dem das Doppelsitzventil (21, 221, 23, 36) eines zweikreisig ansteuerbaren Relaisventils (134) betätigenden Relaiskolben (220) gebildet ist.

12. Relaisventil nach Anspruch 11,
gekennzeichnet durch die folgenden Merkmale:

a) das zweikreisig ansteuerbare Relaisventil (134) enthält einen ersten Relaiskolben (209), der über einen ersten Steueranschluß (217) beaufschlagbar ist;

b) es ist ein zweiter Relaiskolben (220) vorgesehen, der über einen zweiten Steueranschluß (205) beaufschlagbar ist und der zur Betätigung des Doppelsitzventils (21, 221, 23, 36) dient;

c) die beiden Relaiskolben (209, 220) begrenzen eine Steuerkammer (219), die mit dem zweiten Steueranschluß (205) in Verbindung steht;

d) die beiden Relaiskolben (209, 220) sind derart zueinander angeordnet, daß der zweite Relaiskolben (220) mittels des ersten Relaiskolben (209) mechanisch bewegbar ist;

e) dem einen der beiden Steueranschlüsse ist ein von einem Handbremsventil (109) ausgesteuerter Steuerdruck zuführbar;

f) dem anderen (130) der beiden Steueranschlüsse ist der Betriebsbremsdruck oder ein vom Betriebsbremsdruck abhängiger Steuerdruck zuführbar.

**Claims**

1. Relay valve having the following features:

a) a control piston (19, 220) is provided for actuating a valve;

b) the valve comprises a valve member (23) secured to the housing and a valve member (40, 211) associated with the control piston and contains an inlet valve (23, 36);

c) the valve member associated with the control piston is arranged on the side of the control piston that cannot be subjected to the control pressure;

characterised by the following features:

d) the valve member associated with the control piston (19, 220) comprises a valve-member piston (40, 211) or is actuable by a valve-member piston;

e) the valve-member piston (40, 211) is guided in the control piston (19, 220) in a sealed manner inside a pressureless chamber (4, 212) and can be moved against the force of a control spring (5, 213) in the closing direction of the inlet valve (23, 36);

f) the valve-member piston (40, 211) has an active area which can be subjected to the pressure acting on the reaction area (41, 203) of the control piston (19, 220);

g) a stop member (39), secured to the housing, is provided for the control piston (19, 220), against which stop member the control piston (19, 220) can come to rest after a movement in the opening direction of the inlet valve (23, 36);

h) the valve-member piston (40, 221) is arranged in such a manner that it can be moved against the force of the control spring (5, 213) over a path which is longer that the path travelled by the control piston (19, 220) after the opening of the inlet valve (23, 36) until it comes to rest against the stop member (39) which is secured to the housing, when the valve-member piston (40, 211) is in its starting position.

2. Relay valve according to claim 1, characterised by the following features:

a) the valve also includes an outlet valve (21, 38, 221) which together with the inlet valve (23, 36) forms a double seat valve;

b) the double seat valve has a double valve member (22) which together with the valve member (23) secured to the housing forms the inlet valve and together with the valve-member piston (40) forms the outlet valve.

3. Relay valve according to at least one of the preceding claims, characterised in that the chamber (4, 212) that accommodates the control spring (5, 213) is connected to the atmosphere.

4. Relay valve according to claim 3, characterised in that the connection of the chamber (4, 212) that accommodates the control spring (5, 213) to the atmosphere has an opening (17, 201) in the valve-member piston (40, 211) that can be covered by the outlet valve seat and/or by the outlet valve member of the double valve member (22) and an air way (32) in the double valve member (22).

5. Relay valve according to at least one of the preceding claims, characterised by the following features:

a) the valve-member piston (40) surrounds a pin (13) secured in the control piston (19);

b) the pin (13) has a stop member (15) against which the valve-member piston (40) can be brought to rest under the force of the control spring (5).

6. Relay valve according to at least one of the preceding claims, characterised in that to support the control spring (5, 213) on the valve-member piston (40, 211) and/or to support the control spring (5, 213) on the control piston (19, 220), a spring plate is provided the distance of which from the valve-member piston (40, 211) and from the control piston (19, 220) is adjustable.

7. Relay valve according to at least one of the preceding claims, characterised by the following features:

a) the control connection (1, 112) of the relay valve (116) is connected to a compressed-air control valve (109) of a compressed-air braking system for vehicles;

b) the working-pressure output (113) of the relay valve (116) is connected to the pressure chamber of a brake cylinder (119).

8. Relay valve according to claim 7, characterised in that the working-pressure input (114) of the relay valve (116) is connected to a source (106) of supply pressure for the compressed-air braking system.

9. Relay valve according to claim 7 or 8, characterised by the following features:

a) a hand-brake valve (109) is used as the compressed-air control valve;

b) the working-pressure output (113) is connected to the pressure-release chamber (119) of a spring-brake cylinder.

10. Relay valve according to claim 7 or 8, characterised by the following features:

a) a service brake valve, especially a motor railcar brake valve (103), is used as the compressed-air control valve;

b) the working-pressure output (124) is connected to the pressure chamber of a service brake cylinder (121).

11. Relay valve according to at least one of claims 7 to 9, characterised in that the control piston is formed by the relay piston (220) that actuates the double seat valve (21, 221, 23, 36) of a dual-circuit relay valve (134).

12. Relay valve according to claim 11, characterised by the following features:

a) the dual-circuit relay valve (134) contains a first relay piston (209) which can be acted on by way of a first control connection (217);

b) a second relay piston (220) is provided which can be acted on by way of a second control connection (205) and which serves to actuate the double seat valve (21, 221, 23, 36);

c) the two relay pistons (209, 220) delimit a control chamber (219) which is connected to the second control connection (205);

d) the relay pistons (209, 220) are arranged in such a manner with respect to one another that the second relay piston (220) can be moved mechanically by means of the first relay piston (209);

e) a control pressure that is controlled by a handbrake valve (109) can be supplied to one of the two control connections;

f) the service brake pressure or a control pressure that is dependent on the service brake pressure can be supplied to the other (130) of the two control connections.

**Revendications**

1. Valve-relais avec les caractéristiques suivantes:

a) il est prévu un piston de commande (19, 220) pour actionner une soupape;

b) la soupape comprend un organe de soupape (23) solidaire du corps et un organe de soupape (40, 211) conjugué au piston de commande, et comporte une soupape d'entrée (23, 36);

c) l'organe de soupape conjugué au piston de commande est agencé du côte du piston de commande non sollicité par la pression de commande;

caractérisée par les caractéristiques suivantes:

d) l'organe de soupape conjugué au piston de commande (19, 220) est constitué par un piston organe de soupape (40, 211) ou est actionnable par un piston organe de soupape;

e) le piston organe de soupape (40, 211) est guidé l'intérieur d'une chambre sans pression (4, 212), avec étanchéité dans le piston de commande (19, 220), et est mobile dans la direction de fermeture de la soupape d'entrée (23, 36), contre la force d'un ressort de commande (5, 213);

f) le piston organe de soupape (40, 211) présente une surface active pouvant être sollicitée par la pression agissant sur la surface de réaction (41, 203) du piston de commande (19, 220);

g) il est prévu, pour le piston de commande (19, 220), une butée (39) solidaire du corps, contre laquelle le piston de comnande (19, 220) peut venir s'appliquer après un mouvement dans la direction d'ouverture de la soupape d'entrée (23, 36);

h) le piston organe de soupape (40, 221) est agencé de manière à être mobile, contre la force du ressort de commande (5, 213), sur une longueur de trajet plus longue que la longueur de trajet (que le piston de commande (19, 220) parcourt après l'ouverture de la soupape d'entrée (23, 36) jusqu'à son arrivée au contact de la butée (39) solidaire du corps, losque le piston organe de soupape (40, 211) se trouve à sa position initiale.

2. Valve-relais selon revendication 1, caractérisée par les caractéristiques suivantes:

a) la valve contient aussi une soupapr de sortie (21, 38, 221) qui, avec la soupape d'entrée (23, 36) forme une soupape double siège;

b) la soupape double siège présente un double organe de soupape (22) qui, avec l'organe de soupape (23) solidaire du corps, forme la soupape d'entrée et, avec le piston organe de soupape (40), forme la soupape de sortie.

3. Valve-relais selon au moins l'une des revendications précédentes,
caractérisée
par le fait que la chambre (4, 212) recevant le ressort de commande (5, 213) est reliée à l'atmosphère.

4. Valve-relais selon revendication 3, caractérisée par le fait que la communication de la chambre (4, 212) recevant le ressort de commande (5, 213) avec l'atmosphère présente une ouverture (17, 201) dans le piston organe de soupape (40, 211), cette ouverture pouvant être recouverte par le siège de soupape de sortie ou par l'élément soupape de sortie du double organe de soupape (22), et présente une conduite d'air (32) dans le double organe de soupape (22).

5. Valve-relais selon au moins l'une des revendications précédentes,
caractérisée par les caractéristiques suivantes:
a) le piston organe de soupape (40) entoure une broche (13) fixée dans le piston de commande (19);
b) la broche (13) présente une butée (15) au contact de laquelle le piston organe de soupape (40) peut être amené sous la force du ressort de commande (5).

6. Valve-relais selon au moins l'une des revendications précédentes, caractérisée par le fait que, pour l'appui du ressort de commande (5, 213) sur le piston organe de soupape (40, 211) et/ou pour l'appui du ressort de commande (5, 213) sur le piston de commande (19, 220), il est prévu une cuvette de ressort dont la distance au piston organe de soupape (40, 211) ou au piston de commande (19, 220) est modifiable.

7. Valve-relais selon au moins l'une des revendications précédentes,
caractérisée par les caractéristiques suivantes:
a) le raccord de commande (1, 112) de la valve-relais (116) est relié à une valve de commande d'air comprimé (109) d'une installation de freinage à air comprimé pour véhicules automobiles;
b) la sortie de pression de travail (113) de la valve-relais (116) est reliée à la chambre de pression d'un cylindre de frein (119).

8. Valve-relais selon revendication 7,
caractérisée
par le fait que l'entrée de pression de travail (114) de la valve-relais (116) est reliée une source-réserve de pression (106) de l'installation de freinage à air comprimé.

9. Valve-relais selon revendication ou 7 ou 8,
caractérisée par les caractéristiques suivantes:

a) une valve de frein main (109) sert de valve de commande d'air comprimé;
b) la sortie de pression de travail (113) est reliée à la chambre de pression de desserrage (119) d'un cylindre de frein à ressort accumulateur.

10. Valve-relais selon revendication 7 ou 8,
caractérisée par les caractéristiques suivantes:
a) une valve de frein de marche, notamment une valve (103) de frein de vehicule moteur, sert de valve de frein de marche;
b) la sortie de pression de travail (124) est reliée à la chambre de pression d'un cylindre de frein de marche (121).

11. Valve-relais selon au moins l'une des revendications 7 à 9.
caractérisée
par le fait que le piston de commande est constitué par le piston-relais (220) actionnant la soupape à double siège (21, 221, 23, 36) d'une valve-relais (134) à deux circuits de commande.

12. Valve-relais selon revendication 11,
cractérisée par les carictéristiques suivantes:
a) la valve-relais (134) deux circuits de commande contient un premier piston-relais (209) qui peut êre sollicité via un premier raccord de commande (217);
b) il est prévu un deuxième piston-relais (220) qui peut être sollicité via un deuxième raccord de commande (205) et qui sert à l'actionnement de la soupape double siège (21, 221, 23, 36);
c) les deux pistons-relais (209, 220) bordent une chambre de commande (219) qui communique avec le deuxième raccord de commande (205);
d) les deux pistons-relais (209, 220) sont agencés l'un par rapport l'autre de manière telle que le deuxième piston-relais (220) puisse être déplacé mécaniquement au moyen du premier piston-relais (209);
e) une pression de commande résultant de la commande par une valve de frein à main (109) peut être amenée au premier des deux raccords de commande;
f) la pression du frein de marche ou une pression de commande dépendant de cette pression du frein de marche peut être amenée à l'autre (130) des deux raccords de commande.

FIGUR 1

## FIGUR 2

## FIGUR 3

FIGUR 4